# EUROPEAN PATENT APPLICATION

(11) **EP 4 344 961 A1**
(43) Date of publication of application: **03.04.2024**
(21) Application number: 23197279.5
(22) Date of filing: 13.09.2023
(51) Int. Cl.: B60R 19/18, B60R 19/24

(54) **BUMPER FOR VEHICLE AND VEHICLE COMPRISING THE SAME**

(30) Priority: 28.09.2022 CN 202211188759
(71) Applicant: Stellantis Auto SAS, 78300 Poissy (FR)
(72) Inventor: WANG, HONGRI, SHANGHAI, 200233 (CN); WANG, ZI YE, Shanghai, 200233 (CN); LEI, YUANFA, Shanghai, 200233 (CN); YANG, YIYUAN, Shanghai, 200233 (CN); FAN, XINYU, Shanghai, 200233 (CN)

(57) **Abstract**

The invention provides a bumper for a vehicle, comprising: a central part and side parts connecting thereto at the two ends of the central part, each side part has a flange extending inwardly at an upper rim of the side part, the flange includes a first surface facing upward and being smooth and a second surface facing downward in an assembled state, and a side connecting surface connecting the first surface and the second surface, the first and second surfaces are spaced apart to define a material thickness of the flange; a weakened area is provided in the flange, in which the material thickness is thinned from the second surface toward the first surface. The invention also provides a vehicle comprising the bumper. With technical means of the invention, it enables the side parts of the bumper with relatively short length to easily make torsional deformation for meeting requirements of assembling, while ensure a width of the flange sufficient to control the gap between the flange and the lamp, as well to prevent the defects inside the vehicle from being viewed from outside of the vehicle, thereby to ensure overall aesthetics of the vehicle.

## Description

### Technical Field

The invention generally relates to the field of parts and components for motor vehicles, and more specifically, to a bumper for vehicle and vehicle comprising the same.

### Background

The bumper is a safety device for absorbing and mitigating external impacts and protecting the front and rear parts of the vehicle body, and it is usually fixed to a lamp, a fender etc. As a common way of bumper assembling, at first, it is necessary to move a portion of the central part of the bumper below the lamp toward the interior of the vehicle in a longitudinal direction of the vehicle such that the portion of the central part of the bumper is matched with a lamp supporting seat, thereby restraining the bumper as a whole in a vertical direction to ensure that a gap between the bumper and the lamp meets the requirements; and then, it is necessary to make side parts of the bumper connected to the central part thereof to torsionally deform toward the interior of the vehicle in a transverse direction of the vehicle, so that the side parts of the bumper can be subsequently assembled with the fender in a normal direction of the edge of the fender.

Due to the constraints imposed on the bumper by different assembling directions described above, the side parts of the bumper are required to be able to withstand a certain degree of transverse torsional deformation during assembling process, which is usually achieved by utilizing the material toughness of the bumper itself. On the other hand, however, for the flange of the side parts of the bumper which is below the lamp, it is necessary to have a width sufficient to fill the gap below the lamp so as to prevent the interior of the vehicle from being viewed from the exterior of the vehicle through the gap. Moreover, for most vehicles, the length of the side parts of the bumper is usually in a range of 100 to 200 mm. As a result, the flange in this area cannot easily deform, which makes the overall assembling process to be more difficult. For this end, existing technical solutions usually weaken the above-mentioned flange in a way of reducing its width. In doing so, it will affect controlling the gap with lamp and cause an unaesthetic issue, which further leads to complication of the styling design of the related parts and components (e.g., lamp).

### Summary of the Invention

It is an object of the invention to overcome the above-mentioned defects in the prior art and to provide a bumper, the side parts of which are capable of being easily torsioned and deformed to meet the requirements of assembling at relative short length, while have a width of the flange sufficient to facilitate controlling of the gap between the flange and the lamp and to prevent the defects in the interior of the vehicle from being viewed from the exterior of the vehicle, thereby to ensure the overall aesthetics of the vehicle.

In accordance with one aspect of the invention, a bumper for a vehicle is provided, the bumper comprising: a central part and side parts connecting thereto at the two ends of the central part, each side part has a flange extending inwardly at an upper rim of the side part, the flange includes a first surface facing upward and being smooth and a second surface facing downward in an assembled state, and a side connecting surface connecting the first surface and the second surface, the first surface and the second surface are spaced apart to define a material thickness of the flange; wherein a weakened area is provided in the flange, in which the material thickness is thinned from the second surface toward the first surface.

Preferably, the weakened area is formed by providing a notch in the flange, wherein the notch extends by a distance from the second surface toward the first surface, which distance is less than the material thickness of the flange.

Preferably, the distance by which the notch extends is 0.5 mm less than the material thickness of the flange.

Preferably, the cross-section formed by the notch on the second surface is of a V shape, a U shape, or a trapezoidal shape.

Preferably, starting from the side connecting surface of the flange, the notch extends outwardly and does not extend to the side part of the bumper.

Preferably, the notch has a maximum length of opening on the side connecting surface, and wherein starting from the side connecting surface of the flange, the notch gradually tapers outwardly.

Preferably, the maximum length of opening is larger than 10 mm.

Preferably, the weakened area is positioned such that, in comparison with an end of the side part distal from the central part, an end of the side part proximate to the central part is closer to the weakened area.

Preferably, the distance between the weakened area and the end of the side part proximate to the central part is larger than 20 mm, and the distance between the weakened area and the end of the side part distal from the central part is larger than 70 mm.

Preferably, a side reinforcement structure is provided on an internal surface of the bumper and below the weakened area, wherein an intersection line, which is formed by a symmetrical plane of the weakened area extending inwardly and the internal surface of the bumper, does not pass through the area in which the side reinforcement structure is provided.

Optionally, a plurality of weakened areas are provided in the flange, wherein the plurality of weakened areas are provided with equal spacing to each other; or the spacing between the plurality of weakened areas gradually increases in a direction directing from an end of the side part proximate to the central part to an end of the side part distal from the central part.

Optionally, a plurality of weakened areas are provided in the flange, the plurality of weakened areas are formed by providing notches in the flange, wherein the cross-sections formed by respective notches on the second surface are of the same size; or sizes of the cross-sections formed by respective notches on the second surface gradually become smaller in a direction directing from an end of the side part proximate to the central part to an end of the side part distal from the central part.

Optionally, the weakened area is formed integral with the bumper; or is formed via a reprocessing by cutting the bumper.

In accordance with another aspect of the invention, a vehicle is provided, wherein the vehicle comprises the bumper as mentioned above.

By adopting the above technical means, the invention enables the flange of the side parts of the bumper to easily deform for assembling in case of having a short length, while ensure a width of the flange sufficient to fill the gap below the lamp so as to prevent the defects in the interior of the vehicle from being viewed from the exterior of the vehicle, thereby to ensure the overall aesthetics of the vehicle.

### Brief Description of the Drawings

The foregoing and other aspects of the invention will be more thoroughly understood and recognized below in conjunction with the accompanying drawings. It should be noted that in various accompanying drawings of the invention, the features with identical structure or similar function are indicated by the same reference signs. It should be noted that the elements in the accompanying drawings are not necessarily to be strictly drawn to scale with each other, they are intended solely for purposes of clear illustration and are not limiting. In which:
Fig.1a is a partial schematic view of a structure of a vehicle body, which illustrates the relationship of relative positons between a bumper, a lamp and a fender prior to assembling;
Fig.1b is a side sectional view of the assembled bumper obtained in Fig.1a at a transition portion between a central part and a side part of the bumper in a longitudinal direction X of the vehicle;
Fig.2a is a schematic view of connecting area of the assembled bumper, lamp and fender;
Fig.2b is a cross-sectional view in the direction A-A of Fig.2a, which illustrates the matching relationship between a flange at the upper rim of the side part of the bumper and the lamp;
Fig.3a is a partial schematic view illustrating the bumper obtained, for example, from an elevated view of the interior of the vehicle, in which a weakened area provided in the flange of the side parts of the bumper is illustrated;
Fig.3b is a schematic view of the side parts of the bumper obtained from an exterior viewpoint of the vehicle;
Fig.4 is a partial schematic view illustrating the bumper obtained, for example, from an elevated viewpoint of the interior of the vehicle, which further illustrates, in comparison with Fig.3a, parts and components that cooperate with the lamp and the fender;
Figs.5a to 5d illustrate a process for assembling a bumper in accordance with the invention.

### Detailed Description

The implementation and use of embodiments are discussed in details below. It should be appreciated, however, that the specific embodiments discussed only illustrate specific ways of implementing and using the invention and are not intended to limit the scope of the invention. The directional representation of the structural positions of the individual components such as "upper", "lower", "top" and "bottom" etc., is not absolute but relative. When the individual components are arranged as shown in the drawings, these directional representations are appropriate, but when the positions of the individual components in the drawings are changed, these directional representations are changed accordingly.

In the context, unless otherwise expressly specified and limited, the terms "assembling", "connected", "connection", "fixed", etc. shall be construed in a broad sense. For example, it may be a fixed connection, a detachable connection, or one-piece; it may be a mechanical connection or an electrical connection; it may be a direct connection or an indirect connection via intermediate medium, and it may be a communication within the two elements or an interactive relationship between the two elements. For those skilled in the art, the specific meaning of the above terms herein may be construed on a case-by-case basis.

In the context, the terms "transverse" and "longitudinal" are used in relation to the travel direction of the vehicle, wherein "transverse" refers to a left-right or axle direction of the vehicle, and "longitudinal" refers to a front-rear direction of the vehicle. In addition, "inside" and "outside" are defined with reference to the interior and exterior directions of the vehicle, e.g., "inside" refers to the side facing the interior of the vehicle, "outside" refers to the side facing the exterior of the vehicle, "internal surface" refers to the surface facing the interior of the vehicle, "external surface" refers to the surface facing the exterior of the vehicle, "inwardly" or "toward the interior" means in a direction from the exterior of the vehicle to the interior of the vehicle, and "outwardly" or "toward the exterior" means in a direction from the interior of the vehicle to the exterior of the vehicle.

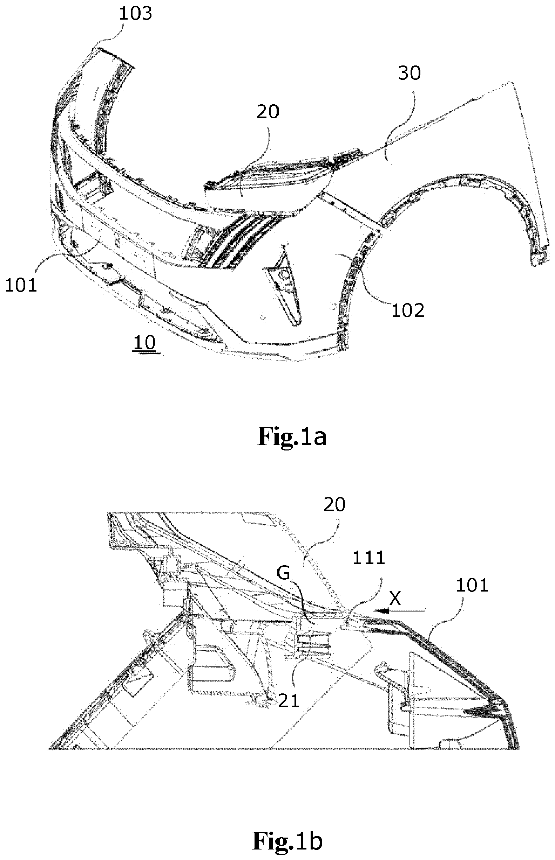

Referring to Fig.1a, it illustrates a front bumper, a lamp and a fender of a vehicle ready for assembling. In the described and illustrated embodiment, for simplicity, only a left-front lamp and a left-front fender of the vehicle are shown. It should be appreciated that in respect to a longitudinal center axis of the vehicle, the structure related to the right side of the bumper is symmetrical with the above-described left side of the structure shown in the figure, and therefore only the left side structure is described as an example in the following specification. In addition, the invention is not limited to the front bumper of the vehicle, and the rear bumper having a similar structure also falls within the protection scope of the invention. As shown in Fig.1a, the bumper 10 comprises a central part 101 and side parts 102 connected thereto at the two ends of the central part 101, wherein a flange 103 for filling a gap below the lamp 20 in an assembled state extends along the upper rim of the side parts 102 of the bumper (the flange on the left side in this figure is obscured by the lamp and thus is invisible). When assembling the bumper 10 with the lamp 20 and the fender 30, a support portion 111 of the bumper below the transition portion between the central part 101 and the side part 102 is firstly inserted into the gap G of a supporting seat 21 below the lamp 20 in an illustrated X-direction (i.e., toward the interior of the vehicle in the longitudinal direction of the vehicle) in conjunction with Fig. 1b, thereby pre-positioning the bumper in a vertical direction. Thereafter, a torsional deformation is applied to the two side parts 102 of the bumper 10 in the transverse direction toward the interior of the vehicle, such that the flange 103 at the upper rim of the side part 102 fills the gap in corresponding area below the lamp 20, and that a positioning member (e.g., a positioning pin, a predetermined positioning catch, etc.) provided at the edge of the side parts of the bumper can be matched with a positioning hole provided at the edge of the fender in a normal direction of the edge of the fender to achieve pre-position, and then final fixation is achieved by a fixing member such as screw etc.

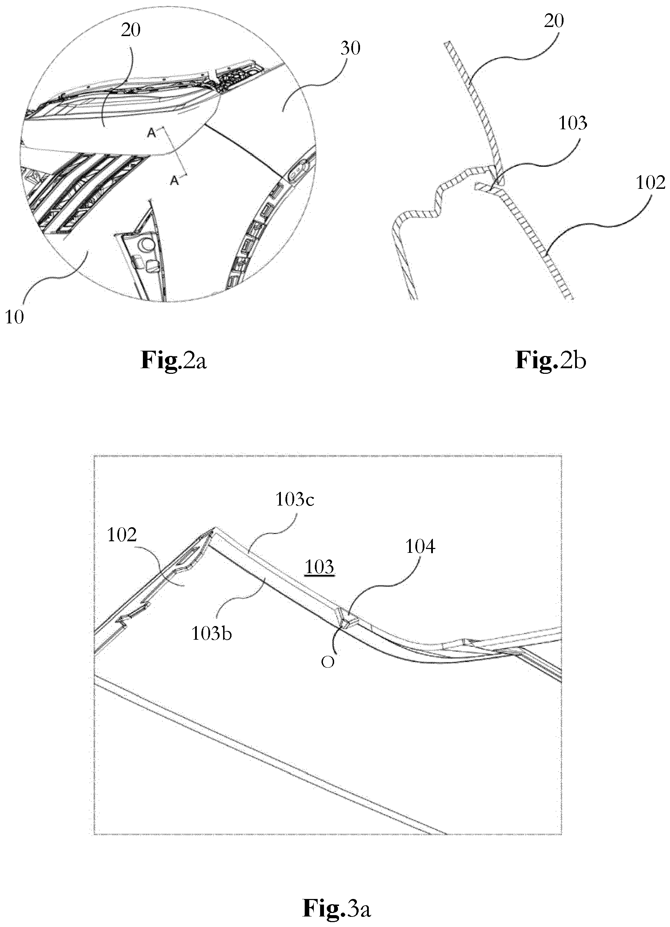

The connecting area of the assembled bumper, lamp and fender is shown in Fig.2a. Further, Fig.2b illustrates a cross-sectional view obtained in a direction A-A in Fig.2a, which schematically illustrates cooperation of the flange 103 at the upper rim of the side parts 102 of the bumper and corresponding area of the lamp. As shown, the portion of the flange 103 extends substantially in the transverse direction of the vehicle into the interior of the vehicle to fill the gap below the lamp 20, serving to provide a view obstruction of the internal components of the vehicle. It will be appreciated that when the vehicle is exposed to sunlight for a long period of time, for example, causing thermal expansion of the portion of the flange or due to gravity on the bumper itself, the flange 103 will tend to gradually move outwardly and protrude from the surface of the lamp, or even completely detach from the gap below the lamp if the width is too short, thereby affecting the overall aesthetics of the vehicle. For this end, in the invention, the flange 103 positioned at the upper rim of the side parts 102 of the bumper has a sufficient width (typically greater than 8 mm) to ensure that there is no significant visible gap between the lamp and the bumper in any case.

As previously described, the length of the side parts of the bumper is typically in a range of 100 to 200 mm, and this relatively short length results in that the toughness of the side part inherently being weak. In addition, the presence of a wide flange at the upper rim accordingly increases the strength of the side parts of the bumper, so that it is less likely to torsionally deform during assembling process, especially in the area where the side parts of the bumper are adjacent to the central part. In order to easily realize the torsional deformation of the side parts of the bumper while ensuring sufficient width of the flange, the invention adopts the idea of providing a weakened area in the flange of the upper rim of the side parts of the bumper, wherein the weakened area is formed in a way of thinning the material thickness to make it easier to realize the torsional deformation during assembling process as compared to the other area of the side parts of the bumper.

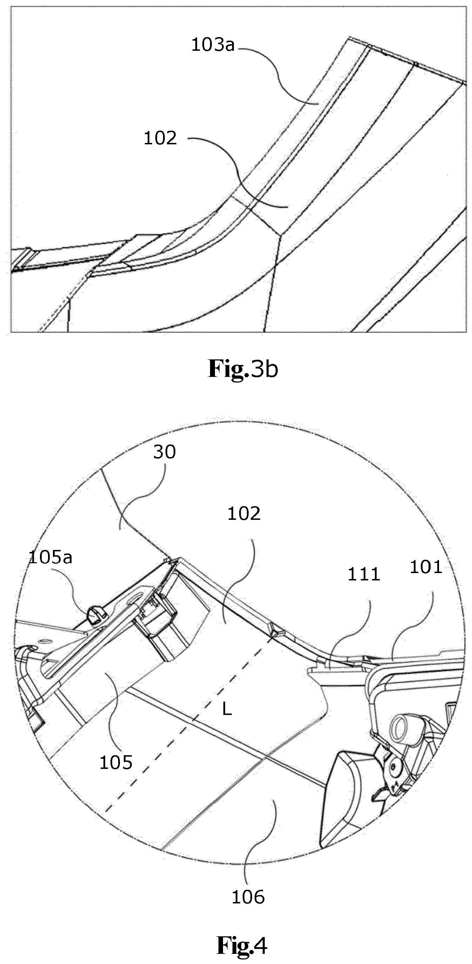

Referring to Figs.3a to 3b below, wherein Fig.3a illustrates a partial schematic view of a bumper according to a preferred embodiment of the invention with respect to the side parts of the bumper obtained from an elevated viewpoint of the interior of the vehicle, and Fig.3b illustrates a view of the side parts of the bumper obtained from an exterior viewpoint of the vehicle. For the sake of clarity, other parts and components, both inside and outside of the bumper, that cooperate with the lamp and/or the fender are omitted from the views of Figs.3a and 3b. As shown, the flange 103 is formed by extending inwardly (i.e., toward a direction pointing the interior of the vehicle) from the upper rim of the side parts 102 of the bumper, the flange 103 and the side parts 102 of the bumper include an angle of substantially 90°. However, the invention is not limited thereto, and it will be readily appreciated that the angle between the flange 103 and the side parts 102 of the bumper may be varied to a certain extent, for example slightly more or less than 90°, depending on practical requirements. Further, the flange 103 includes a first surface 103a facing upward and being smooth, a second surface 103b facing downward in an assembled state and a side connecting surface 103c connecting the first surface 103a and the second surface 103b, wherein the first surface 103a and the second surface 103b are spaced apart from each other by a certain distance to define a material thickness of the flange 103. It will be appreciated that both the first surface 103a and the second surface 103b of the flange 103 conform to the streamlined shape of the upper rim of the side parts of the bumper, so that even though the two surfaces do not necessarily extend flatly throughout the entire region of the side parts of the bumper at all times, the side connecting surface connecting the first and second surfaces maintains substantially a constant material thickness throughout the region. In other words, for a typical bumper, the resistance to torsional deformation is virtually the same in case of a torque being applied to both sides of either point of the flange. In order to achieve the object of the invention, as shown in Fig.3a, a weakened area 104 is further provided in the flange 103, the region where the weakened area 104 is located has a lower resistance to torsional deformation as compared to the rest region of the flange 103 in which region the material thickness is not thinned, thereby making it easier for the side parts of the bumper to achieve torsional deformation during the assembling process, so that to fit with the edge of the fender in the normal direction.

More specifically, the weakened area 104 is implemented in this embodiment in the form of a V-shaped portion. For schematic purposes, only one V-shaped portion is shown in Fig.3a, however it is readily appreciated to those skilled in the art that more than one V-shaped portion may be provided as desired. Further in conjunction with Fig.3a, the V-shaped portion is formed in a manner of thinning the material thickness. That is, in a region where the V-shaped portion is formed, a V-shaped notch as viewed from the downwardly facing second surface 103b of the flange 103 is formed, and the notch extends from the second surface 103b toward the first surface 103a by a certain distance but does not arrive at the first surface 103a, that is to say, the notch extends by a distance that is less than the material thickness of the flange 103. In other words, in the invention, instead of forming a V-shaped groove running through the first and second surfaces of the flange, the first surface 103a of the flange 103 remains smooth for the purpose of obscuring the internal components of the vehicle, when viewed from an external viewpoint of the vehicle (see Fig.3b). In particular, it should be noted that the term "flat" as used herein does not restrict the first surface to remain flat in its entirety, but rather to be free of obvious surface roughness, obvious depressions and bumps, and defects such as holes in the assembled state. In the above case, the V-shaped portion has an upper surface spaced apart from the first surface 103a of the flange 103, the upper surface is spaced apart from the first surface 103a by a distance less than the material thickness of the flange 103. In practice, the distance between the upper surface of the V-shaped portion and the first surface of the flange is preferably 0.5 mm (i.e., the distance by which the V-shaped portion extends from the second surface 103b of the flange 103 toward the first surface 103a is 0.5 mm less than the material thickness of the flange 103), which part of the thickness can meet the requirement for torsional deformation of the side parts of the bumper, and at the same time meet the requirement for obscuring the internal components of the vehicle for aesthetic purposes. On the other hand, in order to ensure sufficient deformation space, a length of an opening which is formed between the two inclined surfaces of the V-shaped portion and formed at the side connecting surface 103c of the flange 103 is preferably greater than 10 mm, and the apex O of the V-shaped portion is close to the inner wall of the side part of the bumper in order to maintain a certain distance, that is to say, the distance between the apex O of the V-shaped portion and the side connecting surface 103c of the flange 103 is less than a width of the flange 103 extending in an interior direction of the vehicle. In this embodiment, an angle between the two inclined surfaces of the V-shaped portion is approximated to be 60°, which means that a notch formed by the V-shaped portion on the second surface of the flange is substantially in the shape of an equilateral triangle. However, the invention is not limited thereto, and those skilled in the art may select a suitable length of the opening and a size of the included angle of the V-shaped portion on the basis of the width of the flange.

Turning to Fig.4 for details regarding the internal surface of the bumper, as shown, a support portion 111 illustrated in Fig.1b is provided underneath a connecting transition portion between the central part 101 and the side part 102 of the bumper, the support portion 111 on one hand supports another portion of the flange extending from the central part 101 of the bumper, and on the other hand is used to be inserted into the gap G (see Fig.1b) of the supporting seat 21 below the lamp 20 in a first step of the assembling process, such that the purpose of restraining the bumper in the vertical direction can be achieved. At the other end of the side part 102 of the bumper distal from the central part 101, a connecting unit 105 for connection to the fender 30 is provided, which unit is provided with positioning pins 105a for pre-positioning. As can be seen from the drawings, the above-mentioned V-shaped portion is positioned in such a way that, when compared to an end of the side parts 102 of the bumper intended to be connected to the fender 30 of the vehicle (i.e., the end distal from the central part 101), an end of the side parts 102 of the bumper proximate to the central part 101 to which it is connected (i.e. the connecting transition portion between the central part and the side part) is closer to the V-shaped portion. That is, in the assembled state, the distance between the V-shaped portion and the support portion 111 is less than the distance between the V-shaped portion and the fender 30. The reason is that, in the second step of the bumper assembling process, it is required to gradually apply a torque in the transverse direction of the vehicle from the connecting transition portion between the central part 101 and side part 102 of the bumper to the end of the side part 102 intended to be connected to the fender 30, that is to say, the requirement for torsional deformation of a region on the side part closer to the connecting transition portion is much higher. On the other hand, the V-shaped portion likewise cannot be provided such that it is much closer to the support portion 111. As shown, a side reinforcement structure 106 for increasing the stiffness of the bumper is fixedly mounted on the internal surface of the bumper. It will be appreciated that when selecting the arranged location of the V-shaped portion, it is required to avoid an influence of the side reinforcement structure 106 on the torsional deformation of the side part 102 of the bumper. As shown, if a virtual plane is selected as a symmetrical plane extending in the inner direction of the vehicle and splits the V-shaped portion, the side reinforcement structure 106 is not permitted to be provided in a region at which an intersection line L (dashed line shown in Fig.4) formed by the virtual plane and the internal surface of the side parts of the bumper is located. In view of the above reason, if the V-shaped portion were provided too close to the support portion 111, this will result in that the above-mentioned intersection line further moves to the region where the side reinforcement structure locates, thereby negatively affecting the torsional deformation of the side parts 102 of the bumper. When considering in conjunction with the above two factors (i.e., the V-shaped portion is required to be relatively close to the central part of the bumper while not being too close without limitation), it is preferred that the V-shaped portion is disposed in a region of the lateral side of the flange in such a way that the distance between the V-shaped portion and the end of the side parts 102 of the bumper that is connected to the central part 101 of the bumper is greater than 20 mm, and the distance between the V-shaped portion and the end of the side parts 102 of the bumper that is to be connected to the fender 30 is greater than 70 mm.

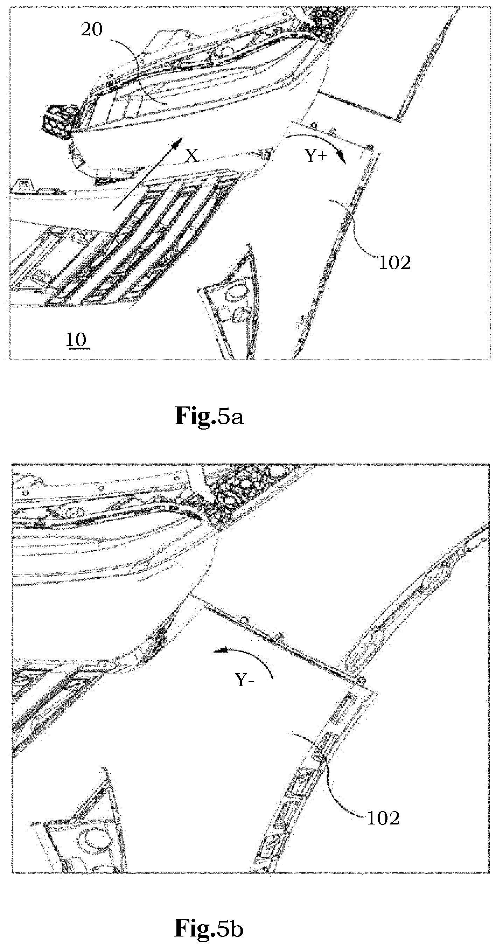

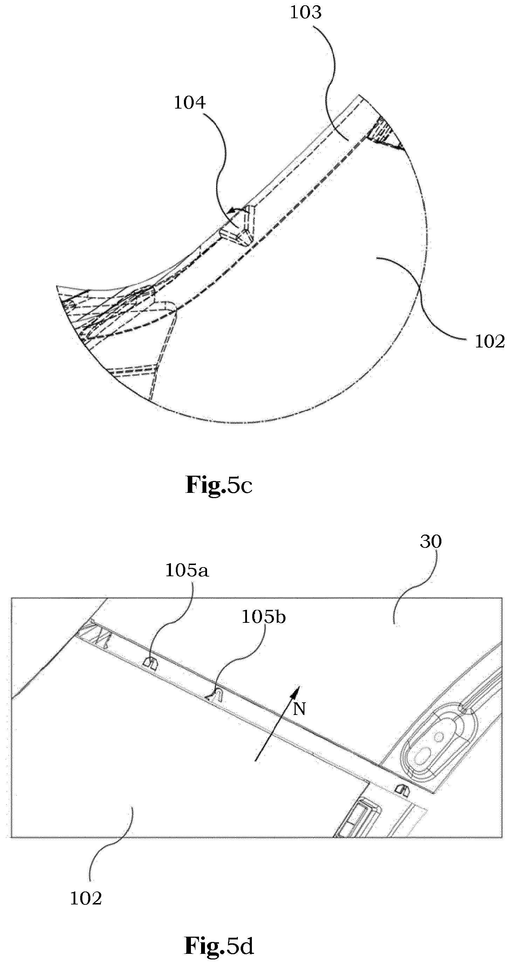

Turning now to Figs.5a to 5d, a process for assembling a bumper in accordance with the invention is illustrated. First, as shown in Fig.5a, the bumper 10 is moved inwardly in the X direction shown in the figure, so that the support portion 111 provided below a connecting transition portion between the central part and the side parts of the bumper matches with the supporting seat 21 below the lamp (shown in conjunction with Fig.1b). At this time, the side part 102 of the bumper will be flared outwardly (i.e., in the Y+ direction shown by the arrow in the figure) in the transverse direction of the vehicle as shown to prevent from scratching the lamp 20. Next, the side part 102 of the bumper is pushed inwardly (in the Y- direction shown by the arrow in the figure) in the transverse direction of the vehicle as shown in Fig.5b so as to cause it to be torsionally deformed. Among other things, Fig.5c illustrates, in a perspective view, a weakened area 104 (i.e., the above-mentioned V-shaped portion) provided in the flange 103 of the side parts 102 of the bumper, as viewed from an external viewpoint of the vehicle. Since the material thickness of the flange in the region where the V-shaped portion locates is relatively thin, the V-shaped portion will be slightly folded as shown in the direction of the arrow in the figure, but the first surface of the flange does not visually appear to be noticeably bulged from the exterior viewpoint of the vehicle, but remains essentially flush with the rest of the surface, i.e., the first surface of the flange appears to be flat and smooth as a whole from the exterior viewpoint. The above-mentioned process of applying the torsional deformation is continued until a positioning member (e.g., a positioning pin 105a, a pre-positioned catch 105b, etc.) located at an edge of the side part 102 of the bumper is able to be aligned, in the normal direction N of the edge of the fender 30, with positioning holes provided in the edge of the fender 30, as shown in Fig.5d. Finally, the positioning member provided on the bumper is inserted into the positioning holes on the fender, and final fixation is achieved by a fixing member such as a screw.

The bumper of the invention is described with respect to the preferred embodiments, however the invention is not limited to the embodiments described above, and there may be a variety of variants.

As described above, the weakened area is formed by providing a corresponding notch in the flange of the side parts of the bumper. It will be appreciated that the cross-section formed by the notch on the second surface of the flange (i.e., the projected shape resulting from projecting the notch on the second surface of the flange) is not limited to a V-shape, but rather has a wider range of options, for example, including but not limited to, a U-shape, a trapezoidal shape, and the like. It is also noted that in the embodiment shown in the invention, it is preferred such that the notch has a maximum opening length on the side connecting surface of the flange, and that starting from the side connecting surface of the flange, the notch gradually tapers in an exterior direction of the vehicle. In conjunction with the view of the deformation of the V-shaped portion in Fig.5c above, it can be seen that such an arrangement ensures that a portion of the V-shaped portion relatively close to the interior of the vehicle has a larger opening length (i.e., the range of deformation of the portion is increased in disguise, while avoiding stress concentration caused by torsional deformation in a relatively small range). Of course, the invention is not limited to this. That is to say, embodiments in which the opening length of the notch remains constant throughout the extension direction or even opposite to the preferred embodiment described above (i.e., in which the notch has a relatively small opening length on the side connecting surfaces of the flange and the opening length is gradually widened in the exterior direction of the vehicle) fall within the protection scope of the invention as well.

Furthermore, it is appreciated by those skilled in the art that the portion of the weakened area where the material thickness is thinned can be formed either integral with the bumper by a molding process such as injection molding, blister molding, compression molding, etc., or by a secondary process of removing a portion of the material thickness in a cutting manner from existing bumper.

In addition, as mentioned above, a plurality of weakened areas such as V-shaped notches may be provided in the flange. Each of the weakened areas (i.e., the potions with thinned material thickness) is arranged at a certain spacing apart from each other. Optionally, the spacing is identical. Furthermore, considering that when a torsional deformation is applied to the side parts of the bumper, the portion proximate to the central part of the bumper is more difficult to deform as compared to the portion distal from the central part, it is preferred that the spacing between respective material thickness reduction portions provided in the area proximate to the central part of the bumper is smaller than the spacing between respective material thickness reduction portions provided in the area distal from the central part of the bumper, which contributes to provide more material thickness reduction portions in a relatively short area and to make more significant weakened effect in this area. Considering from the same reason, the cross-sections formed by each of the material thickness reduction portions in the second surface can be selected either with the same size, or with a larger cross-section size of the material thickness reduction portions in the area closer to the central part of the bumper, and with a gradually smaller cross-section size of the material thickness reduction portions in a direction toward one end of the side parts of the bumper which is distal from the central part (i.e., the end that is connected to the fender). With the above operation, the same effect of more significant weakened effect in the area proximate to the central part of the bumper can be achieved.

The invention is described in details in connection with specific embodiments. Obviously, the above description as well as the embodiments illustrated in the accompanying drawings are to be understood as exemplary and do not constitute a limitation of the invention. It should be appreciated to those skilled in the art that the embodiments described herein may be used in combination with each other, and that the various components of the invention may be arbitrarily combined with each other, unless such combination would violate the purpose of the invention or cannot be realized. Thus the invention in its broader sense is not limited to the specific details, representative structures, and exemplary embodiments shown and described.

## Claims

1. A bumper (10) for a vehicle, comprising:
a central part (101) and side parts (102) connecting thereto at the two ends of the central part (101), each side part (102) has a flange (103) extending inwardly at an upper rim of the side part, the flange (103) includes a first surface (103a) facing upward and being smooth and a second surface (103b) facing downward in an assembled state, and a side connecting surface (103c) connecting the first surface (103a) and the second surface (103b), the first surface (103a) and the second surface (103b) are spaced apart to define a material thickness of the flange (103);
wherein a weakened area (104) is provided in the flange (103), in which the material thickness is thinned from the second surface (103b) toward the first surface (103a).

2. The bumper of claim 1, wherein the weakened area (104) is formed by providing a notch in the flange (103), wherein the notch extends by a distance from the second surface (103b) toward the first surface (103a), which distance is less than the material thickness of the flange (103).

3. The bumper of claim 2, wherein the distance by which the notch extends is 0.5 mm less than the material thickness of the flange (103).

4. The bumper of claim 2, wherein the cross-section formed by the notch on the second surface (103b) is of a V shape, a U shape, or a trapezoidal shape.

5. The bumper of claim 4, wherein starting from the side connecting surface (103c) of the flange (103), the notch extends outwardly and does not extend to the side part (102) of the bumper (10).

6. The bumper of claim 5, wherein the notch has a maximum length of opening on the side connecting surface (103c), and wherein starting from the side connecting surface (103c) of the flange (103), the notch gradually tapers outwardly.

7. The bumper of claim 6, wherein the maximum length of opening is larger than 10 mm.

8. The bumper of any one of claims 1-7, wherein the weakened area (104) is positioned such that, in comparison with an end of the side part (102) distal from the central part (101), an end of the side part (102) proximate to the central part (101) is closer to the weakened area (104).

9. The bumper of claim 8, wherein the distance between the weakened area (104) and the end of the side part (102) proximate to the central part (101) is larger than 20 mm, and the distance between the weakened area (104) and the end of the side part (102) distal from the central part (101) is larger than 70 mm.

10. The bumper of any one of claims 1-7, wherein a side reinforcement structure (106) is provided on an internal surface of the bumper (10) and below the weakened area (104), wherein an intersection line (L), which is formed by a symmetrical plane of the weakened area extending inwardly and the internal surface of the bumper (10), does not pass through the area in which the side reinforcement structure (106) is provided.

11. The bumper of any one of claims 1-7, wherein a plurality of weakened areas (104) are provided in the flange (103), wherein the plurality of weakened areas (104) are provided with equal spacing to each other; or the spacing between the plurality of weakened areas (104) gradually increases in a direction directing from an end of the side part (102) proximate to the central part (101) to an end of the side part (102) distal from the central part (101).

12. The bumper of any one of claims 1-7, wherein a plurality of weakened areas (104) are provided in the flange (103), the plurality of weakened areas (104) are formed by providing notches in the flange (103), wherein the cross-sections formed by respective notches on the second surface (103b) are of the same size; or sizes of the cross-sections formed by respective notches on the second surface (103b) gradually become smaller in a direction directing from an end of the side part (102) proximate to the central part (101) to an end of the side part (102) distal from the central part (101).

13. The bumper of any one of claims 1-7, wherein the weakened area (104) is formed integral with the bumper (10); or is formed via a reprocessing by cutting the bumper (10).

14. A vehicle, comprising the bumper (10) of any one of claims 1-13.
